# EUROPEAN PATENT SPECIFICATION

(11) **EP 1 033 573 B1**
(45) Date of publication and mention of the grant of the patent: **17.11.2004**
(21) Application number: 00301529.4
(22) Date of filing: 25.02.2000
(51) Int. Cl.: G01N 33/483, G01N 21/00, G01N 15/14, G01N 33/80, G01N 33/569

(54) **Automated analyzing system and method thereof**
Automatisiertes Analysesystem und -verfahren
Procédé et système de détection automatique

(30) Priority: 26.02.1999 JP 5180399; 18.02.2000 JP 2000105619
(43) Date of publication of application: 06.09.2000
(73) Proprietor: Sysmex Corporation, Kobe-shi, Hyogo 651-0073 (JP)
(72) Inventor: Mishima, Yoshihiro, Kobe-shi, Hyogo (JP); Narisada, Noriyuki, Akashi-shi, Hyogo (JP)
(74) Representative: Paget, Hugh Charles Edward

(56) References cited:
- US-A- 5 316 951
- US-A- 5 336 467
- US-A- 5 743 209
- PAN ET AL.: "Evaluation of Sysmex SF-3000(TM) Automated Hematology Analyzer" SYSMEX JOURNAL INTERNATIONAL, vol. 8, no. 1, 1998, pages 34-37, XP002232385

## Description

The present invention relates to analyzing systems that analyze blood, urine and like vital samples. The invention relates more particularly to an analyzing system that analyzes vital samples from a plurality of animal type under analysis conditions adapted to the animal type.

Various tests such as blood tests, biochemical examination, and general screenings are conducted as clinical trials utilizing human blood, urine and like vital samples. Such trials have application not only to human beings, but also to dogs, rats, and other animals, and are conducted likewise.

Nevertheless, because the components of vital samples, for example erythrocyte cell size and density, differ from human beings according to the type of animal, there will be instances in which analyzing systems for humans cannot be employed as is. In these cases, the analysis is performed matching analyzing system analysis conditions to the animal type of the sample to be measured, by varying, for example, analyzing program and measurement sensitivity, and furthermore, reaction time and assaying reagents.

To assay mingled samples wherein the analysis conditions differ among them, with a single analyzing device the analysis conditions have to be re-set corresponding to the animal type with every measurement, or separate analyzing devices have to be readied for each of the species.

An analyzing device having a broad measuring range must be employed wherein samples of differing species are to be assayed with the same analyzing device, so as to be able to assay any of the animal types among them. Employing such an analyzing device presents technical difficulties depending on the animal type and the assay items, which otherwise raise the cost of the analyzing device itself.

Further, even being able to keep the target assays for different animal type within the assaying range of a single analyzing device, there will be instances in which reliable results cannot be obtained by performing merely the same analysis on the quantitative results for the different animal type. For example, wherein a plurality of cell types are analyzed in a two-dimensional scattergram based on a plurality of detection signals, there will be cases in which the characteristics of each detection signal for each cell will differ according to the animal type. Reliable data cannot be obtained unless the detection signal analytical method accommodates these characteristics. Accordingly, getting the assay method to be common to all of the animal type is difficult.

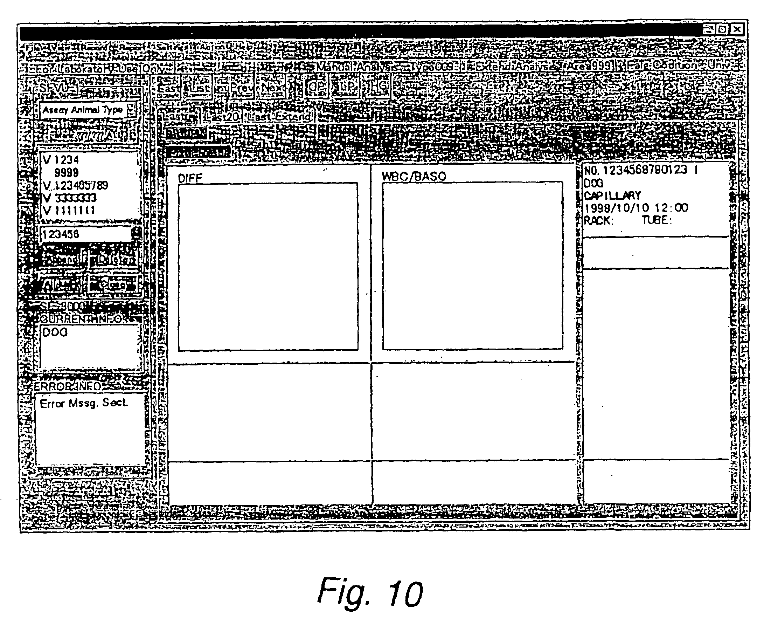

Further still, assaying different animal type with a single analyzing device has the following problems. Fig. 10 depicts an animal type input screen in a conventional analyzing device. A window **71** is provided on the input screen for inputting animal type. When a user clicks on the arrow in the window **71**, a list of configurable animal type is displayed, enabling the animal type that is to be assayed to be set. This operation is done each and every time an assay is made. Herein, changing animal type wherein vital samples of different animal type are mingled is a very involved operation. Further, wherein analyzing devices are prepared for each animal type, just that animal type number of analyzing devices becomes the plurality needed, elevating costs.

US 5336467 describes a chemical analyser adapted e.g. to test the serum of animals. The analyser operates by detecting the change in intensity of light reflected by the tested sample during a reaction. The analyser has stored in its memory the normal ranges for tests which are performed with respect to different categories of animals. The analyser displays a list of a variety of animals so that a user can select a particular animal. The analyser alerts the user if the test results are outside the normal ranges.

### SUMMARY OF THE INVENTION

An object of the present invention is to provide an analyzing device enabling analysis with ease of operation wherein differing samples of animal type are mingled.

The foregoing circumstances have been taken into consideration in the present invention. Therefore, according to the present invention in a first aspect, there is provided an automated analyzing system as set out in claim 1.

The animal type table assigns correspondences between and stores animal type and identifying information designating the animal type. The animal type input means functions to input, utilizing the identifying information, animal type of a vital sample that is analyzed. With the analysis configuration means, analysis condition settings are altered in accordance with inputted animal type.

Various modes for inputting the identifying information herein might be given as examples: manual input by a user, automated input by reading from a barcode or IC chip, or automated input by instructions from a host computer. The identifying information consists of, for example, one or two alphanumeric characters.

Preferably, the analysis configuration means alters measurement sensitivity in conformance with the inputted animal type.

For example, in analyzing blood, erythrocyte size will vary greatly depending on the animal type. Herein, the measurement sensitivity in is altered in correspondence with the animal type.

Preferably, the analysing means assays measurement data utilizing an assaying program adapted to the inputted animal type.

For example, in analyzing leukocytes, parameters and reference values for assaying the five classes of leukocytes differ with each animal type. Herein, the automated analyzing system analyzes measurement data utilizing parameters and reference values adapted to the inputted animal type.

The assaying program may demarcation analyze a two-or-more-dimensional scattergram based on measurement data for two or more species.

For example, from measurement data by flow cytometry, the assaying program expresses size and interior structural information of an analytical object in a two-dimensional graph, and designates the analytical object on the graph from cluster size and position.

The analyzing system of the present invention may be provided with table configuration means for receiving a setting that assigns correspondences between animal types in the animal type table and the identifying information that designates animal types.

This system has the advantage that the user can, with the user's own running of the automated analyzing system, configure the assignment of correspondences between animal type and identifying information.

According to the present invention in a second aspect, there is provided an automated analyzing method according to claim 6.

In a further aspect the invention, there is provided a computer-readable recording medium in which a program for executing the automated analyzing method is recorded. Examples that might be given of recording media herein are computer-readable floppy disks, hard disks, semiconductor memory, CD-ROMs, DVDs, and magneto optical disks (MOs).

In a yet further aspect the invention, there is provided a transmission medium transmitting a program for executing the automated analyzing method. Examples that might be given of transmission media herein are communications media (optical fibers, radio circuitry) in computer network (LAN, Internet, and radio communications network) systems for supplying program information by propagation as carrier waves.

The foregoing and other objects, features, aspects and advantages of the present invention will become more apparent from the following detailed description in conjunction with the accompanying drawings.

### BRIEF DESCRIPTION OF THE DRAWINGS

Fig. 1 (a) and (b) are oblique views of an automated analyzing system for illustrating one embodiment of the present invention;
Fig. 2 is a configurational explanatory diagram of an automated analyzing system for illustrating one embodiment of the present invention;
Fig. 3 is a particle-size distribution graph from an instance of assaying erythrocytes and platelets;
Fig. 4 diagrams flow-cytometry principles employed in a leukocyte analyzer;
Fig. 5 is a scattergram showing an example of assay results for human leukocytes
Fig. 6 is a conceptual explanatory diagram of an animal type table;
Fig. 7 is an example of a configuration screen for the animal type table;
Fig. 8 is an example of a circuit diagram for a signal processor that processes detection signals;
Fig. 9 is scattergrams showing leukocyte assay results for the animal types; and
Fig. 10 is an explanatory diagram illustrating a conventional animal type input method.

### DETAILED DESCRIPTION OF THE PREFERRED EMBODIMENTS

Examples that can be given of analyzing systems to which the present invention is applicable are blood analyzing systems and biochemical assaying systems. Animal types that are assayed would include dogs, cats, rats, and mice, as well as humans.

In the animal type table, correspondences are assigned between animal type and identifying information designating the animal type. An ID number made up of one or two alphanumeric characters, for example, can be used as identifying information. The animal type table, wherein there is a host computer, may be held in the host computer, or may be held in the controllers that constitute the automated analyzing system. A "host computer" is an information terminal that manages a plurality of analyzers and controllers and is connected to them via a network.

Examples that might be given of animal type input means are keyboards for manually inputting animal type IDs for assay samples, reception means for receiving ID signals from a host computer, and reading means for ID automated reading. "Automated reading" can be understood to be the reading of IDs from, for example, IC chips or barcodes on sample containers.

The following explains one embodiment of the present invention with reference to the drawings.

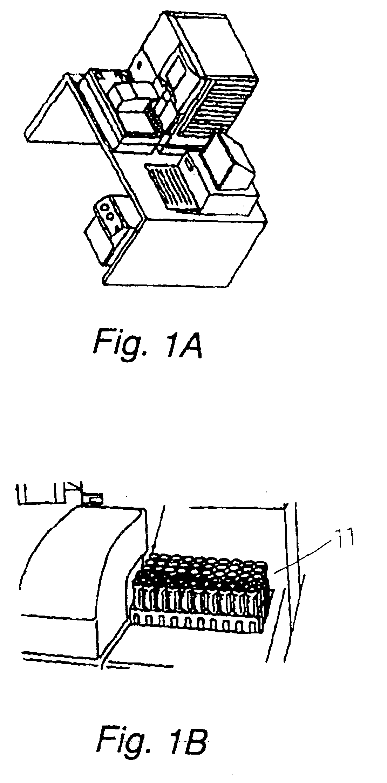

Explanation will be made wherein multi-item automated blood analyzing system SF-3000 (Sysmex Corp. mfr.) is employed as an automated analyzing system. Fig. 1 (a) is an oblique view of an automated analyzing system in connection with the present embodiment. Fig. 1 (b) depicts a section wherein samples are set in the analyzing system of Fig. 1 (a).

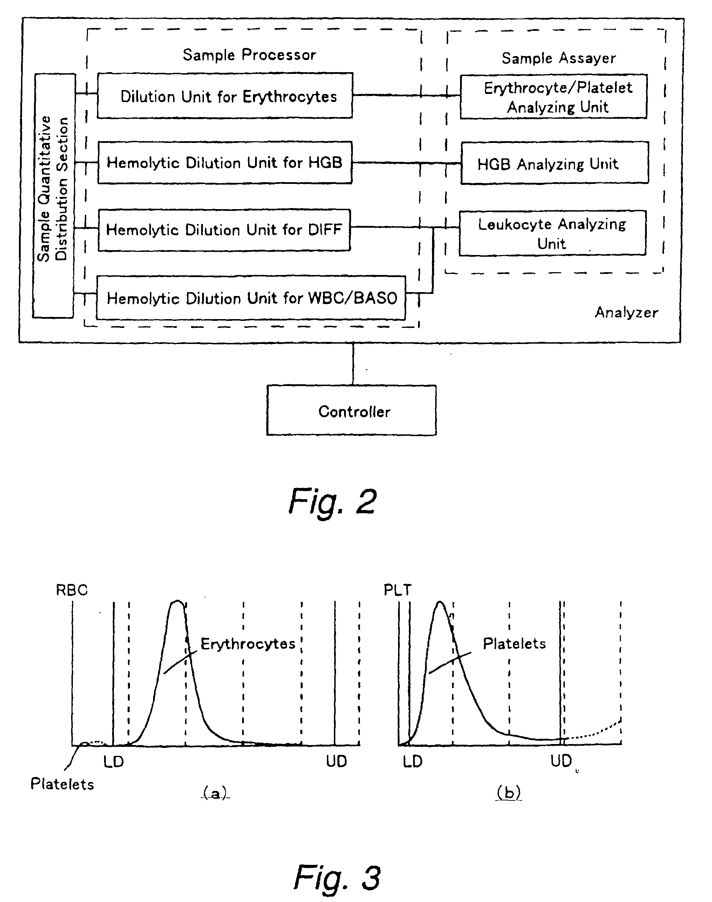

Fig. 2 is a bock diagram illustrating functions of the automated analyzing system. The automated analyzing system is made up of an analyzer and a controller that controls it. The analyzer has a sample quantitative distribution section, a sample processor, and a sample assayer. The sample assayer is provided with erythrocyte and platelet analyzing units, a leukocyte analyzing unit, and a hemoglobin (HGB) analyzing unit. To process the samples so that they are suitable for measurement by the sample assayer, the sample processor has: a dilution process unit for erythrocytes, a hemolytic dilution process unit for HGB, a hemolytic dilution process unit for differential (DIFF), and a hemolytic dilution process unit for white blood cells/basophils (WBC/BASO).

Analyzing operation by the automated analyzing system will be explained. Referring again to Fig. 1(a) and (b), which depict overviews of the present analyzing system, blood to be analyzed is collected into vacuum sampling tubes that are stored thus in a rack **11**, and set into the sampler of the analyzing system. In a sample aspirating section not shown), a barcode reader reads barcodes pasted to the sampling tubes, and the sample tube IDs are recorded in the analyzing system. A sample-aspirating piercer then pierces the sample tubes, and the blood within the sample tubes is aspirated. A sampling valve in the sample quantitative distribution section quantitatively distributes the aspirated blood into four respectively determined sample volumes.

A first blood sample is sent to the dilution process unit for erythrocytes and is diluted with a diluent. It is then sent to the erythrocyte and platelet analyzing unit wherein the erythrocytes and platelets are measured by electrical signal changes when the blood cells are passed through a detection unit. In the present embodiment example, blood cell analysis is conducted by a DC (direct current) detection system. In a DC detection system, change in impedance across electric poles when cells pass through detection unit pores in which DC current is flowed expresses as pulses. Pulse height reflects the size of the detected cells. Fig. 3(a) and (b) show one example of results in which erythrocytes and platelets have been assayed by discriminating according to cell size. Fig. 3 (b) is a magnified diagram of the assay results in Fig. 3(a) for platelets.

A second blood sample is sent to the hemolytic dilution process unit for HGB (hemoglobin) and henolytically diluted with a diluent and a hemolyzing agent for HGB assay. It is then sent to the hemoglobin analyzing unit wherein HGB density is computed by measuring photo-absorbance.

A third blood sample is sent to the hemolytic dilution process unit for DIFF, wherein hemolytic dilution is carried out for approximately 10 seconds with a hemolyzing agent for the leukocyte classes. As a result, the erythrocytes are hemolyzed, the morphology of the leukocytes is retained, and the eosinophils of the leukocyte subpopulation are stained. The process liquid is sent to the leukocyte analyzing unit. The leukocyte analyzing unit conducts assays by flow cytometry.

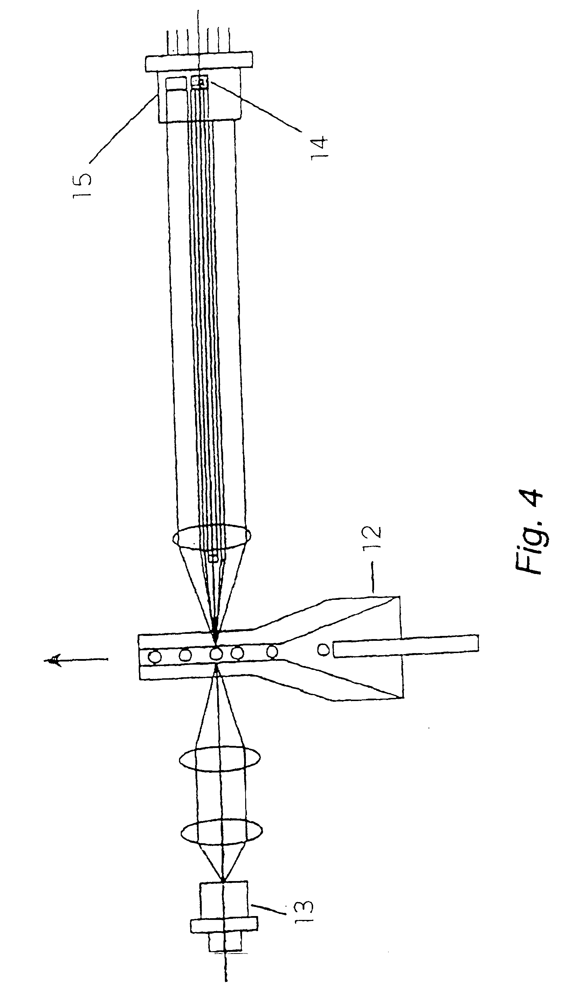

Fig. 4 illustrates principles of assaying by flow cytometry. As shown in the figure, leukocytes are flowed one-by-one in a flow cell **12**. The leukocytes are irradiated by a laser beam from a semiconductor laser **13**, which yields low-angle forward-scattered light and high-angle forward-scattered light that is detected by respective photodiodes **14** and **15**. The low-angle forward-scattered light reflects leukocyte size; the high-angle forward-scattered light reflects leukocyte inner morphology, such as nuclei and granules.

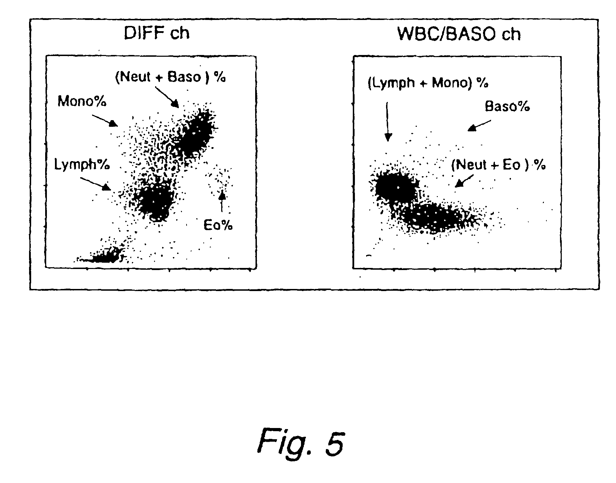

Fig. 5 depicts an example of a scattergram of yielded as a result of this assay. In the "DIFF ch" of Fig. 5, lymphocyte (Lymph), monocyte (Mono) eosinophil (Eo), and neutrophil and basophil (Neu + Baso) subpopulations have been demarcation-analyzed according to differences in leukocyte size and in the leukocyte internal information. The vertical axis is the high-angle forward-scattered light intensity, and the transverse axis the low-angle forward-scattered light intensity.

A fourth blood sample is sent to the hemolytic dilution unit for WBC/BASO, wherein a hemolytic dilution process is conducted for approximately 30 seconds with a hemolyzing agent for basohpils. As a result, the erythrocytes are hemolyzed, and the membranes of leukocytes apart from basophils are dissolved to become nuclei-naked and contracted. The process fluid is sent to the leukocyte analyzing unit, where by flow cytometry likewise as described earlier low-angle forward-scattered light and high-angle forward-scattered light are measured.

Reference is again made to the Fig. 5 depiction of a scattergram example yielded as a result of the sample assay. In the WBC/BASOch of Fig. 5, subpopulations of basophils (Baso), lymphocytes and monocytes (Lympho + Mono) and multinucleated cells apart from basophils (Neut + Eo) are demarcation-analyzed. The verticla axis is high-angle scatterd light intensity; the transverse axis, low-angle scatterd light.

Leukocyte counts, and particle counts and percentages for the five classes of leukocytes are computed according to the assay results for the third blood sample and the assay results for the fourth blood sample.

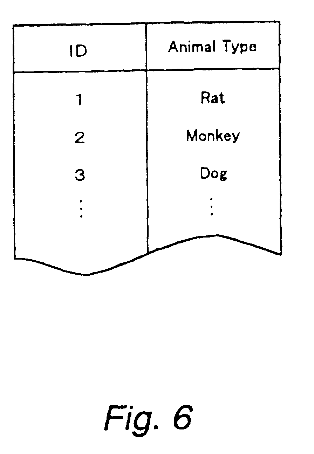

The automated analyzing system maintains an animal type table in which correspondences between analyzable animal types and IDs for designating the animal types are assigned. A conceptual explanatory diagram of an animal type table is shown in Fig. 6. The animal type table in the present embodiment example is held in the controller. Wherein the automated analyzing system has a plurality of analyzers and controllers that are managed with a host computer, the animal type table may be heldin the host computer. wherein the animal type table is held in the host computer, the controllers refer to the host computer for the animal types that correspond to inputted IDs for every input of an ID.

By inputting the ID with whichever method, the assay target animal type is designated preceding the assay. Automatic input by reading automatically from barcodes pasted onto the sample containers or from IC chips would be possible ID input methods. Specifically, animal types as IDs based on 1- or 2-digit numerals or characters are included into specimen numbers for the samples, from which the IDs, in a predetermined position in the specimen number, are read. It should be understood that the IDs can be received via a network from a host computer managing the flow of specimens in the automated analyzing system overall.

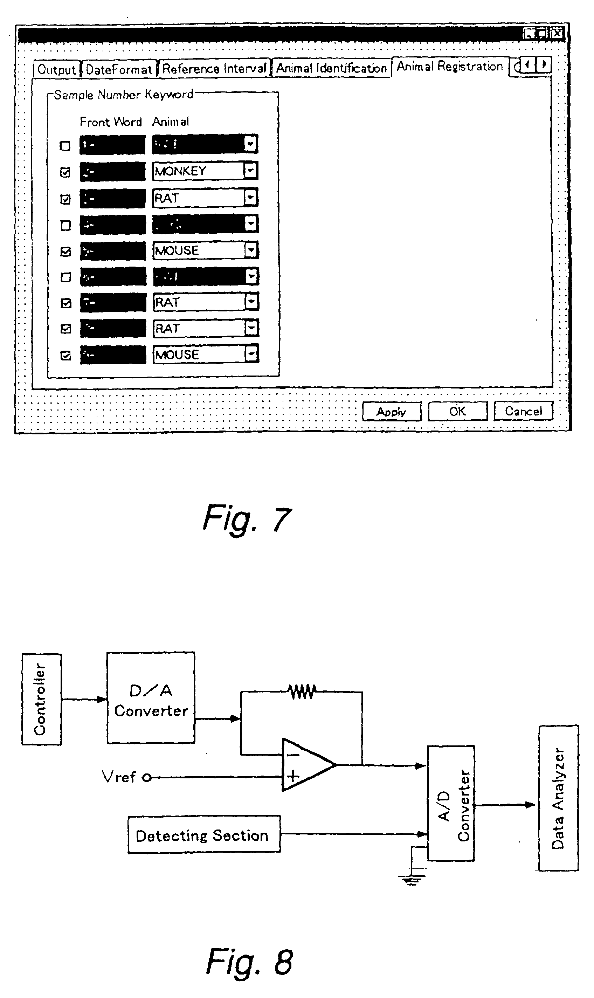

Assigning correspondences in the automated analyzing system between animal types and IDs is preferably user-configurable, as shown in Fig. 7. The user can set the animal type corresponding to each ID to suit his or her own running of the automated analyzing system. In this example, the numeral before the first hyphen in the specimen number is made the ID designating animal type. In the figure, animal type settings have been made by checking checkboxes beside "2," "3," "5," "7," "8" and "9." For example, 2-(...) has been set to designate "monkey," and 3-(...), "rat."

Settings for measurement sensitivity and assaying method are altered according to the animal type inputted as described earlier.

The erythrocyte analyzing unit will now be explained. In humans the average size of red blood cells (mean corpuscular volume, MCV) is 80-90*fl* (femoliters). On the other hand, the average size of platelets (MPV) is considerably smaller, around 10*fl*. If one looks at the counts, erythrocytes are several hundred thousand/ 1, which is one figure greater that the 10-30 thousand platelets/ 1. This is smaller than the average red corpuscle size (MCV) for each of the animals--which, for example, is around 70*fl* for dogs and rabbits, and around 50*fl* for rats and mice. Results from the platelet assay are susceptible to the effects of noise exerted by red blood corpuscles because the erythrocyte analyzing unit assays red blood corpuscles and platelets simultaneously. Therefore, when both are incorporated into the assaying range, the signal detection sensitivity must be set according to the animal type, to enable distinguishing between platelets and the small red blood corpuscles or noise.

Herein, in the present automated analyzing system, the erythrocyte analyzing unit measurement sensitivity corresponding to animal type such as rat or mouse is altered automatically. Specifically, the signal resolution is adapted to the size distribution of the cells that are the target of the assay. Using Fig. 8, switching the gain will be explained as an example of a way to adjust resolution.

Fig. 8 is an example of a circuit diagram for a signalprocessing unit that processes obtained detection signals. The analyzing system switches the base current in response to the animal type that the D/A converter has identified. The detection signal resolution is thereby adapted to the animal type in the A/D converter. Putting the base current to half, for example, halves the largest value of signal by which the process is done, but raises the resolution again as much. This as a result makes it possible to detect tiny cells such as platelets with precision. Accordingly, the detection sensitivity of the erythrocyte detection unit is automatically adapted to an identified animal type.

Next, an explanation of the leukocyte analyzing unit will be made. Leukocytes are 30*fl* - 250*fl* in size and take up broad distribution width. Nonetheless, leukocytes do not include tiny cells such as platelets and therefore in the leukocyte analyzing unit of the present analyzing system the assaying sensitivity does not have to be varied according to animal type.

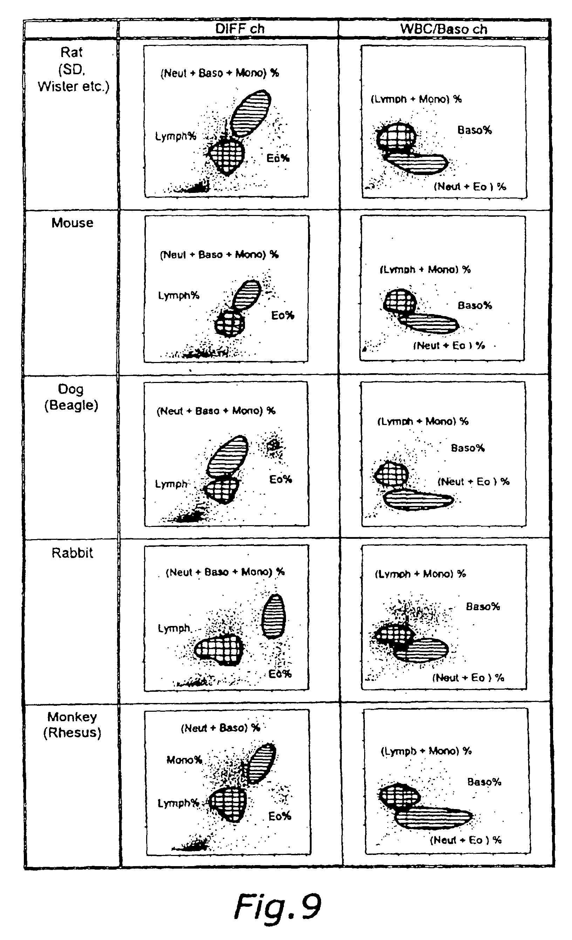

To obtain analytical results for DIFF and WBC/BASO, however, a plurality of populations has to be demarcation-analyzed in a two-dimensional scattergram. Fig. 9 is an example of normal rat, mouse, dog (beagle), rabbit and monkey scattergrams for DIFF and WBC/BASO. As Fig. 9 indicates, percentages, and the size of, and internal information on granules for, the cells in the leukocyte subpopulations differ depending on the animal type. Among the leukocyte subpopulations for instance in the Fig. 9 DIFF scattergrams, for each animal type compare the neutrophil + basophil population (diagonally hatched areas in the figure) position against the large-numbered lymphocyte population (cross-hatched areas in the figure). In the monkey it is exhibited diagonally above, exhibited immediately above in the dog (beagle); and in the mouse, it is in a position intermediary between these. Then in humans, it is exhibited in a laterally separated positions, near the position where eosinophils are exhibited. Looking at the percentages, furthermore, the number in the neutrophil + basophil population in the mouse is considerably small compared to the other animal types.

This difference derives from the fact that the size ratios for and inner morphology of each of the cells, in particular the ratio of granules, differs depending on the animal. Note that because rabbit neutrophils possess staining properties resembling eosinophils, there are what is known as false eosinophils.

An analyzing system for human beings has what becomes a reference scattergram by analyzing various human scattergrams beforehand. Then, though assayed populations are exhibited in positions somewhat different from usual, due to such factors in humans as individual differences, disease cases and blood preservation condition, conforming to the reference scattergram, to those positions enables demarcation-analysis. Accordingly conforming to the different animal types fully, however, lowers the precision of the demarcation analysis, and leads to specimens for abnormal disease cases being assayed like normal.

Herein, reference scattergrams in which scattergrams for each animal type are assayed, and reference scattergram conformance parameters are prepared in the present analyzing system. Then utilizing a scattergram analyzing method that corresponds to the animal type selected as the target assay, the assayed scattergram is analyzed.

Furthermore, in assaying cells wherein the number is tiny according to the animal type, increasing the measuring time in the analyzing unit will raise the analyzing precision.

The animal types shown in Fig. 9 can be assayed under the same reagent conditions as for humans, but depending on the animal type, conditions for hemolytic dilution of the samples may have to be varied. It is possible in those cases that the kinds of reagents, and the detection unit, will be altered according to the animal type.

In the present embodiment example, explanation has been made by giving instances that vary any of measurement sensitivity, assay program and reagent conditions. But depending on animal type, it is possible that an automated analyzing system in connection with the present invention analyze by varying all or any arbitrary grouping of these.

Further, the automated analyzing system can output the assay results to a file that includes all of the animal types, or can output them to separate files for each animal type.

### Other Embodiment Examples

(A) Recording media on which a program that executes the above-described processes of the present invention are included in the present invention. Computer-readable floppy disks, hard disks, semiconductor memory, CD-ROMs, magneto optical disks (MOs) illustrate examples of recording media.
(B) Transmission media that transmit a program that executes the above-described processes of the present invention are included in the present invention. "Transmission media" include communications media in computer network systems for supplying program information by propagation as carrier waves. Examples that might be given computer networks are LANs, the Internet, and radio communications networks. Optical fibers and radio circuitry illustrate examples of communications media.

Utilizing the present invention, input of animal types can be performed readily, which wherein the animal type is to be changed when assaying, alleviates the burdensomeness of the analyzing operation.

That is, because the settings for the analyzing conditions that correspond to the animal type can be set automatically by software just by setting the animal type likewise as the setting for the specimen number, the analyzing operation for a plurality of kinds of animals is readily done.

## Claims

1. An automated analysing system for analysing a vital sample of an animal, the automated analysing system having:
analysing means for analysing the vital sample on the basis of an analysis condition;
an animal type table including an animal type and identifying information which designates that animal type; and
an animal type input means for inputting identifying information designating an animal type of a vital sample to be analysed;
**characterised in that** said automated analysing system has analysis configuration means for configuring said analysis condition in accordance with the animal type designated by the inputted identifying information.

2. An automated analysing system according to claim 1, wherein said analysis configuration means configures measurement sensitivity in accordance with the animal type designated by the inputted identifying information.

3. An automated analysing system according to claim 1 or claim 2, wherein said analysing means assays measurement data utilising an assaying program adapted to the animal type designated by the inputted identifying information.

4. An automated analysing system according to claim 3, wherein said assaying program analyses a two-or-more-dimensional scattergram based on measurement data for two or more species.

5. An automated analysing system according to any one of claims 1 to 4, having table configuration means for receiving settings which assign a correspondence between an animal type included in the animal type table and identifying information to designate said animal type.

6. An automated analysing method for analysing a vital sample of an animal, the method including the steps of:
preparing an animal type table including an animal type and identifying information designating said animal type;
inputting the identifying information to designate an animal type of a vital sample to be analysed; and
analysing a vital sample on the basis of an analysis condition;
**characterised in that**, prior to said analysing step, the method includes the step of configuring said analysis condition in accordance with the animal type designated by the inputted identifying information.

7. A computer-readable recording medium on which a program for executing the automated analysing method according to claim 6 is recorded.

8. A transmission medium transmitting a program for executing the automated analysing method set forth in claim 6.

## Patentansprüche

1. Automatisiertes Analysesystem zur Analyse einer Vitalprobe von einem Tier, wobei das automatisierte Analysesystem Folgendes umfasst:
Analysemittel zur Analyse der Vitalprobe auf Basis einer Analysebedingung;
eine Tiertyptabelle, die einen Tiertyp und Identifikationsinformationen umfasst, die den Tiertyp kennzeichnen;
ein Tiertypeingabemittel zur Eingabe von Identifikationsinformationen, die einen Tiertyp einer zu analysierenden Vitalprobe kennzeichnen;
**dadurch gekennzeichnet, dass** das automatisierte Analysesystem Analysekonfigurationsmittel zur Konfiguration der Analysebedingung gemäß dem Tiertyp umfasst, der durch die eingegebenen ldentifikationsinformationen gekennzeichnet ist.

2. Automatisiertes Analysesystem nach Anspruch 1, worin das Analysekonfigurationsmittel die Messempfindlichkeit gemäß dem Tiertyp konfiguriert, der durch die eingegebenen Identifikationsinformationen gekennzeichnet ist.

3. Automatisiertes Analysesystem nach Anspruch 1 oder Anspruch 2, worin das Analysemittel Messdaten unter Verwendung eines Testprogramms prüft, das an den Tiertyp angepasst ist, der durch die eingegebenen Identifikationsinformationen gekennzeichnet ist.

4. Automatisiertes Analysesystem nach Anspruch 3, worin das Testprogramm ein zwei- oder mehrdimensionales Punktdiagramm analysiert, das auf Messdaten für zwei oder mehr Spezies basiert.

5. Automatisiertes Analysesystem nach einem der Ansprüche 1 bis 4 mit einem Tabellenkonfigurationsmittel zum Empfangen von Einstellungen, die eine Übereinstimmung zwischen einem in der Tiertyptabelle enthaltenen Tiertyp und Identifikationsinformationen zuordnen, um den Tiertyp zu kennzeichnen.

6. Automatisiertes Analysesystem zur Analyse einer Vitalprobe von einem Tier, wobei das Verfahren die folgenden Schritte umfasst:
Herstellung einer Tiertyptabelle, die einen Tiertyp und Identifikationsinformationen umfasst, die den Tiertyp kennzeichnen;
Eingabe der Identifikationsinformationen, um einen Tiertyp einer zu analysierenden Vitalprobe zu bestimmen; und
Analyse einer Vitalprobe auf der Basis einer Analysebedingung;
**dadurch gekennzeichnet, dass** das Verfahren vor dem Analyseschritt den Schritt des Konfigurierens der Analysebedingung gemäß dem Tiertyp umfasst, der durch die eingegebenen Identifikationsinformatianen gekennzeichnet ist.

7. Computerlesbares Speichermedium, auf dem ein Programm zur Durchführung des automatisierten Analyseverfahrens gemäß Anspruch 6 gespeichert ist.

8. Übertragungsmedium zum Übertragen eines Programms zur Durchführung des automatisierten Analyseverfahrens gemäß Anspruch 6.

## Revendications

1. Un système d'analyse automatisé pour analyser un échantillon vital d'un animal, le système d'analyse automatisé comprenant:
des moyens d'analyse pour analyser l'échantillon vital sur la base d'une condition d'analyse;
un tableau de type d'animal comprenant un type d'animal et des informations d'identification qui désignent ce type d'animal; et
des moyens d'introduction de type d'animal pour introduire des informations d'identification désignant un type d'animal d'un échantillon vital à analyser;
**caractérisé en ce que** ledit système d'analyse automatisé comprend des moyens de configuration d'analyse pour configurer ladite condition d'analyse conformément au type d'animal désigné par les informations d'identification introduites.

2. Un système d'analyse automatisé selon la revendication 1, dans lequel lesdits moyens de configuration d'analyse configurent une sensibilité de mesure conformément au type d'animal désigné par les informations d'identification introduites.

3. Un système d'analyse automatisé selon la revendication 1 ou la revendication 2, dans lequel lesdits moyens d'analyse déterminent des données de mesure en utilisant un programme de détermination adapté au type d'animal désigné par les informations d'identification introduites.

4. Un système d'analyse automatisé selon la revendication 3, dans lequel ledit programme de détermination analyse un diagramme de dispersion en deux dimensions ou davantage sur la base de données de mesure pour deux espèces ou davantage.

5. Un système d'analyse automatisé selon l'une quelconque des revendications 1 à 4, comprenant des moyens de configuration de tableau pour recevoir des réglages qui assignent une correspondance entre un type d'animal compris dans le tableau de type d'animal et les inf ormations d'identification pour désigner ledit type d'animal.

6. Un procédé d'analyse automatisé pour analyser un échantillon vital d'un animal, le procédé comprenant les étapes consistant à:
préparer un tableau de type d'animal comprenant un type d'anim al et des informations d'identification désignant ledit type d'animal;
introduire les informations d'identification pour désigner un type d'animal d'un échantillon vital à analyser; et
analyser un échantillon vital sur la base d'une condition d'analyse;
**caractérisé en ce que**, avant ladite étape d'analyse, le procédé comprend l'étape consistant à configurer ladite condition d'analyse selon le type d'animal désigné par les informations d'identification introduites.

7. Un support d'enregistrement lisible p ar ordinateur sur lequel est enregistré un programme pour exécuter le procédé d'analyse automatisé selon la revendication 6.

8. Un support d'émission émettant un programme pour exécuter le procédé d'analyse automatisé énoncé à la revendication 6.
